(19) Europäisches Patentamt
European Patent Office
Office européen des brevets

(11) **EP 1 806 938 B1**

(12) **EUROPEAN PATENT SPECIFICATION**

(45) Date of publication and mention
of the grant of the patent:
**23.04.2008   Bulletin 2008/17**

(51) Int Cl.:
**H04Q 7/34** *(2006.01)*      **H04B 7/26** *(2006.01)*

(21) Application number: **06250063.2**

(22) Date of filing: **06.01.2006**

(54) **Method and system for identifying occurence of shadowing phenomenon during wireless communications**

Verfahren und Vorrichtung zum Identifizieren von Abschattungserscheinungen bei drahtloser Kommunikation

Procédé et sytème d'identification de phénomène d'effet de masquage pendant une communication sans fil

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**11.07.2007   Bulletin 2007/28**

(73) Proprietor: **Chien, Cheng-Hao**
**Taipei City (TW)**

(72) Inventors:
• **Chien, Cheng-Hao**
**Taipei City (TW)**
• **Wu, Hau-Tieng**
**San-Min Dist.,**
**Kaohsiung City (TW)**

(74) Representative: **Alexander, Thomas Bruce et al**
**BOULT WADE TENNANT,**
**Verulam Gardens**
**70 Gray's Inn Road**
**London WC1X 8BT (GB)**

(56) References cited:
**EP-A- 1 063 786        EP-A- 1 111 810**
**EP-A- 1 453 336        US-A- 5 889 488**

• **PATENT ABSTRACTS OF JAPAN vol. 2003, no. 12, 5 December 2003 (2003-12-05) & JP 2005 244726 A (MATSUSHITA ELECTRIC IND CO LTD), 8 September 2005 (2005-09-08)**

**Description**

The invention relates to a method and system for wireless communications, more particularly to a method and system for real-time identification of occurrence of shadowing phenomenon during wireless communications.

In recent years, due to the conveniences of mobility and less restrictions on communications locations offered by wireless communications, people have become accustomed to using wireless communications to communicate with others. For example, people own at least one mobile phone. In addition, wireless network cards have become a basic component of new consumer electronic products.

When a wireless signal transmission path is blocked due to interference by an obstacle (such as a building), there will be a substantial loss in signal power. This phenomenon is known as fading, which is considered to be a very important phenomenon in the field of wireless communications. There are two main types of fading, i.e., fast fading and long-time fading. Long-time fading is also known as shadowing. Many schemes, such as error control coding and re-transmission, have been proposed heretofore to mitigate the effects of fast fading. In some voice channel applications, the effects of fast fading are actually ignored because they usually do not affect communications content among humans. However, shadowing cannot be ignored because it may last for a considerable amount of time and may result in abrupt failure in communications.

In order to ensure the quality of wireless communications, a signal-receiving device of user end equipment (such as a mobile phone) or system service end equipment (such as a base station) will periodically execute a synchronization process to generate a set of channel-transmission-state estimated values that includes power and phase parameters, such as those defined in Section 5.1 of ETSI TS 125 211 V6.4.0 (March, 2005), for correcting the effects of wireless signal transmission paths on transmitted signals. At present, since actual changes in phase parameters during real world communications are complex and difficult to analyze, majority of current communications system service end equipments refer solely to the power parameters as basis for evaluating quality of wireless communications and for determining whether handoff between base stations should be conducted. For instance, mobile phones will periodically transmit Keep_Alive signals to base stations, and base stations respond to the Keep_Alive signals by sending ACKnowledge signals to mobile phones. However, when the signal transmission path between a base station and a mobile phone is blocked, the shadowing phenomenon occurs, and the mobile phone that was unable to receive the ACKnowledge signal will automatically increase the transmission power for the Keep_alive signal to a maximum and adjust the frequency of transmissions of the Keep_Alive signal to a maximum, thereby resulting in large consumption of power resources of the mobile phone. In the case that the signal transmission path experiences complete shadowing phenomenon, such as when the mobile phone is inside an elevator, the above tasks performed by the mobile phone result in wasteful power consumption, and do not lead to an improvement in communications quality.

Therefore, the object of the present invention is to provide a method and system for identifying occurrence of shadowing phenomenon during wireless communications to achieve advantages, such as reduction in power consumption and possibility of conducting handoff between base stations at an earlier time.

According to one aspect of the present invention, a method for identifying occurrence of shadowing phenomenon is to be implemented using a wireless communications system that includes a signal-transmitting device and a signal-receiving device. The signal-receiving device periodically executes a synchronization process to evaluate quality of wireless communications conducted through a signal transmission path between the signal-transmitting device and the signal-receiving device. A set of signal-state estimated values that includes at least a phase parameter and a power parameter is generated during each synchronization process. The method comprises the steps of:

a) collecting the phase parameters for a number of the synchronization processes;
b) generating a set of Poincaré coordinate data from the phase parameters collected in step a);
c) analyzing distribution of the set of Poincaré coordinate data generated in step b) on a Poincaré map; and
d) determining that the signal transmission path is experiencing a shadowing phenomenon when the set of Poincaré coordinate data generated in step b) has a non-elliptical distribution on the Poincaré map, and that the signal transmission path is not experiencing the shadowing phenomenon when the set of Poincaré coordinate data generated in step b) has an elliptical distribution on the Poincaré map.

According to another aspect of the present invention, a signal-receiving device is capable of identifying occurrence of shadowing phenomenon and is adapted for use in a wireless communications system. The wireless communications system includes a signal-transmitting device capable of wireless communications with the signal-receiving device. The signal-receiving device comprises:

a main system for periodically executing a synchronization process to evaluate quality of wireless communications conducted through a signal transmission path between the signal-transmitting device and the signal-receiving device, a set of signal-state estimated values that includes at least a phase parameter and a power parameter being generated during each synchronization process; and

an identification module coupled to the main system and configured to collect the phase parameters for a number of the synchronization processes, to generate a set of Poincaré coordinate data from the phase parameters collected thereby, to analyze distribution of the set of Poincaré coordinate data on a Poincaré map, and to determine that the signal transmission path is experiencing a shadowing phenomenon when the set of Poincaré coordinate data analyzed thereby has a non-elliptical distribution on the Poincaré map, and that the signal transmission path is not experiencing the shadowing phenomenon when the set of Poincaré coordinate data analyzed thereby has an elliptical distribution on the Poincaré map.

According to still another aspect of the present invention, a wireless communications system capable of identifying occurrence of shadowing phenomenon comprises:

user end equipment including a user signal -receiving device and a user signal-transmitting device; and
system service end equipment including a system signal-transmitting device capable of wirelessly transmitting signals to be received by the user signal-receiving device, and a system signal-receiving device capable of wirelessly receiving signals transmitted by the user signal-transmitting device.

At least one of the user signal-receiving device and the system signal-receiving device periodically executes a synchronization process to evaluate quality of wireless communications conducted through a signal transmission path between said at least one of the user signal-receiving device and the system signal-receiving device, and the corresponding one of the system signal-transmitting device and the user signal-transmitting device. A set of signal-state estimated values that includes a phase parameter is generated during each synchronization process.
Said at least one of the user signal-receiving device and the system signal-receiving device collects the phase parameters for a number of the synchronization processes, generates a set of Poincaré coordinate data from the phase parameters collected thereby, analyzes distribution of the set of Poincaré coordinate data generated thereby on a Poincaré map, and determines that the signal transmission path is experiencing a shadowing phenomenon when the set of Poincaré coordinate data analyzed thereby has a non-elliptical distribution on the Poincaré map, and that the signal transmission path is not experiencing the shadowing phenomenon when the set of Poincaré coordinate data analyzed thereby has an elliptical distribution on the Poincaré map.
Other features and advantages of the present invention will become apparent in the following detailed description of the preferred embodiments with reference to the accompanying drawings, of which:

Figure 1 is a flowchart to illustrate consecutive steps of the preferred embodiment of a method for identifying occurrence of shadowing phenomenon during wireless communications according to the present invention;
Figure 2 is a flowchart to illustrate how extent of the shadowing phenomenon is determined in the method of the preferred embodiment;
Figure 3 is a schematic diagram of an exemplary wireless communications environment to illustrate the method of the preferred embodiment;
Figure 4 is a Poincaré map for the example of Figure 3, illustrating a case where the shadowing phenomenon has yet to occur;
Figure 5 is another Poincaré map for the example of Figure 3, illustrating a case where mild shadowing phenomenon has occurred;
Figure 6 is yet another Poincaré map for the example of Figure 3, illustrating a case where severe shadowing phenomenon has occurred; and
Figure 7 is a block diagram to illustrate the preferred embodiment of a wireless communications system capable of identifying occurrence of shadowing phenomenon according to the present invention.

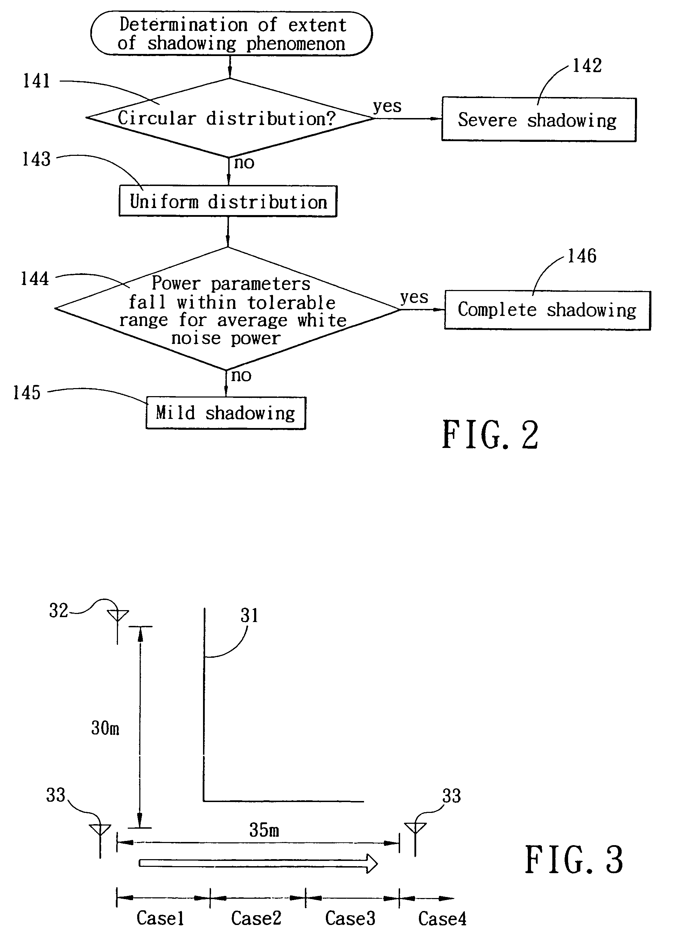

In order to solve the drawbacks of the prior art associated with failure to detect occurrence of the shadowing phenomenon, the applicant of the present invention proposes to utilize the phase parameters generated during synchronization processes when conducting wireless communications, together with Poincaré mapping techniques, to identify whether a signal transmission path is experiencing the shadowing phenomenon with accuracy such that handoff or other tasks may be conducted at an earlier time.

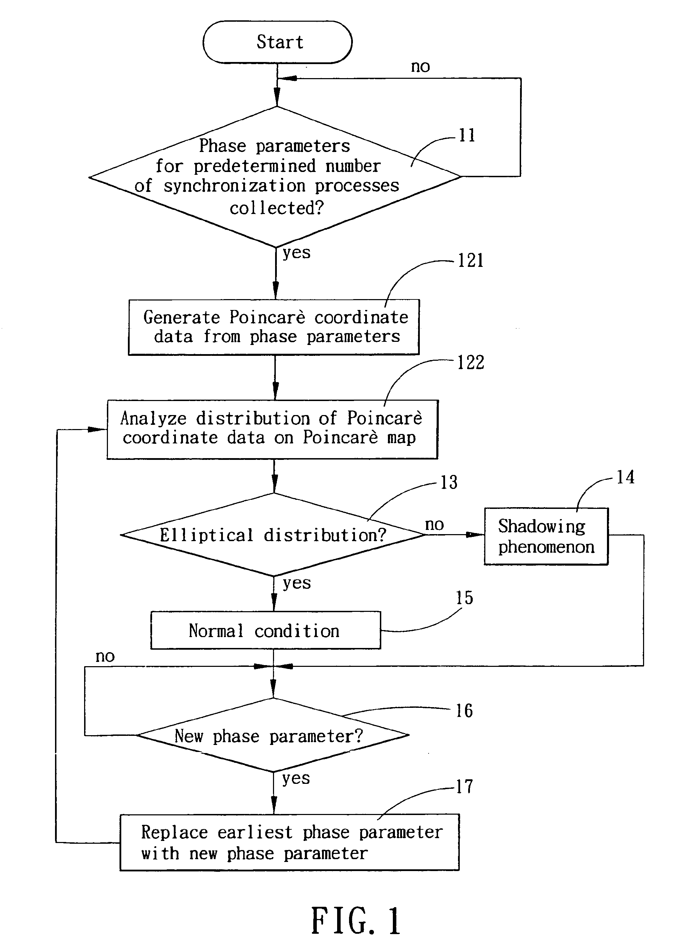

Figure 1 is a flowchart to illustrate the preferred embodiment of the method for identifying occurrence of the shadowing phenomenon in a signal transmission path according to this invention.
In order to facilitate understanding of the preferred embodiment, before the method of the preferred embodiment is described in greater detail, an exemplary wireless communications environment will be first described herein with reference to Figure 3 to help illustrate the concept of the method of the preferred embodiment.
Figure 3 illustrates a building 31 with a corner, a receiver 32 disposed at a first side of the building 31, and a transmitter 33 disposed at a second side of the building 31. The transmitter 33 is 30m away from the receiver 32 in a measuring direction parallel to the first side of the building 31 when the transmitter 33 is at an initial position. The receiver 32 is fixed in its position, whereas the transmitter 33 is moved a distance of 35m from the initial position in a direction parallel to the second side of the building 31. During movement of the transmitter 33, the presence of the building 31 affects signal reception of the receiver 32. As a result, there are four cases that arise during movement of the transmitter 33. The first case is a normal case (Case 1) where shadowing phenomenon has yet to occur, and the transmitter 33 can transmit direct waves to the receiver 32 without interference from the building 31. The shadowing phenomenon is experienced in the other three cases. In particular, the second case is a mild shadowing case (Case 2) where the signal transmission path between the transmitter 33 and the receiver 32 is partially blocked by the building 31. The third case is a severe shadowing case (Case 3) where, while the signal transmission path between the transmitter 33 and the receiver 32 has experienced severe shadowing phenomenon, the receiver 32 can still receive signals from the transmitter 33. The fourth case is a complete shadowing case (Case 4) where the transmitter 33 has moved 35m from the initial position, and the signal transmission path between the transmitter 33 and the receiver 32 is completely blocked by the building 31. The receiver 32 only receives white noise at this time.

In the exemplary wireless communications environment of Figure 3, the signal frequency is 2.4 GHz, and the transmitter 33 continuously transmits signals and the receiver 32 continuously receives signals. The phase parameters of signal-state estimated values in the signals received by the receiver 32 are then collected to generate Poincaré coordinate data that are subsequently analyzed in terms of their distribution on a Poincaré map.

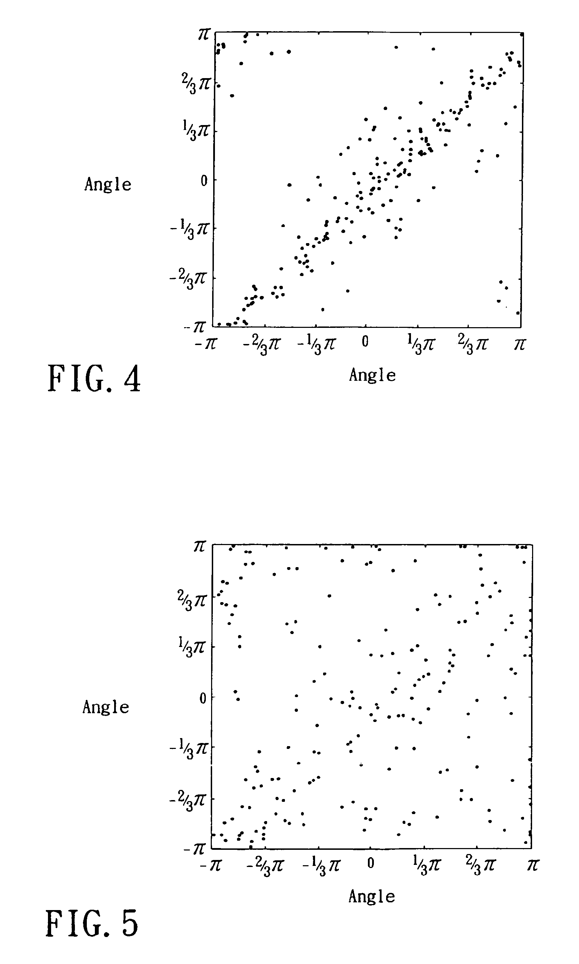

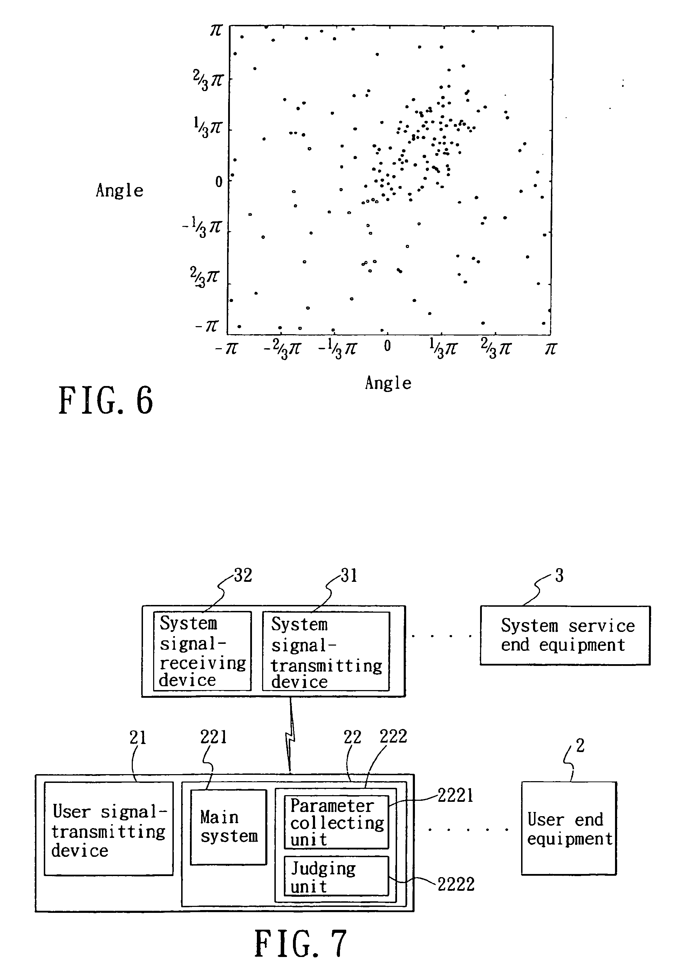

From experimental results, for the aforementioned Case 1 condition, the Poincaré coordinate data generated from the phase parameters thus collected have an elliptical distribution on the Poincaré map, as best shown in Figure 4. For the aforementioned Case 2 condition, the Poincaré coordinate data generated from the phase parameters thus collected are uniformly distributed throughout the Poincaré map, as best shown in Figure 5. For the aforementioned Case 3 condition, majority of the Poincaré coordinate data generated from the phase parameters thus collected have a circular distribution on the Poincaré map, as best shown in Figure 6. For the aforementioned Case 4 condition, the distribution of the Poincaré coordinate data generated from the phase parameters thus collected is similar to that shown in Figure 5, where the Poincaré coordinate data are uniformly distributed throughout the Poincaré map. It is thus evident from the foregoing that the distribution of the Poincaré coordinate data generated from the phase parameters thus collected on the Poincaré map will vary with the condition of the signal transmission path. Therefore, in the method of the preferred embodiment, by analyzing the distribution of the Poincaré coordinate data generated from the phase parameters thus collected on the Poincaré map, it is possible to identify the current condition of the signal transmission path.

The method of the preferred embodiment will now be described with reference to Figure 1. The method of the preferred embodiment is to be implemented using a wireless communications system, such as that shown in Figure 7. The wireless communications system includes a plurality of system service end equipments 3 and a plurality of user end equipments 2. When the wireless communications system is in an idle state, each user end equipment 2 will continuously execute a synchronization process, where the user end equipment 2 transmits a Keep_Alive signal for reception by the corresponding system service end equipment 3. Theoretically, in response to the Keep_Alive signal received thereby, the system service end equipment 3 transmits an ACKnowledge signal for reception by the corresponding user end equipment 2. Therefore, when the signal transmission path between the user and service end equipments 2, 3 is not blocked, the user end equipment 2 is able to receive the ACKnowledge signal transmitted by the corresponding system service end equipment 3. The set of signal-state estimated values generated during each synchronization process includes at least a phase parameter and a power parameter. In this embodiment, the phase parameters for a number of the synchronization processes are collected and stored. In 3G communications systems, sixteen synchronization processes are executed within an interval of 10 milliseconds. In GSM communications systems, one synchronization process is executed every 16 milliseconds.

In step 11 of the method of the preferred embodiment, it is determined if the phase parameters for a predetermined number (such as 300) of the synchronization processes have been collected. The flow proceeds to step 121 if affirmative. Otherwise, step 11 is repeated until the phase parameters for the predetermined number of the synchronization processes have been collected.

In step 121, a set of Poincaré coordinate data, each corresponding to a temporally adj acent pair of the phase parameters thus collected, is generated to result in points on a Poincaré map. In the case where 300 phase parameters (i.e. $\theta_1$ to $\theta_{300}$) were collected, 299 Poincaré coordinate data, i.e. , $(\theta_1, \theta_2)$, $(\theta_2, \theta_3)$, $(\theta_3, \theta_4)$ ... $(\theta_{299}, \theta_{300})$, are generated for the Poincaré map.

Subsequently, in step 122, the distribution of the set of Poincaré coordinate data thus generated on the Poincaré map is analyzed.

Thereafter, in step 13, it is determined if the set of Poincaré coordinate data has an elliptical distribution on the Poincaré map. If the set of Poincaré coordinate data has a non-elliptical distribution on the Poincaré map, the signal transmission path is determined as experiencing a shadowing phenomenon in step 14. On the other hand, if the set of Poincaré coordinate data has an elliptical distribution on the Poincaré map, the signal transmission path is determined as having a normal condition, i.e., Case 1, in step 15. The flow proceeds to step 16 after step 14 or step 15. Therefore, in the method of the preferred embodiment, the distribution of the Poincaré coordinate data generated from the phase parameters thus collected on the Poincaré map are analyzed to effectively identify whether the signal transmission path is experiencing the shadowing phenomenon. Based on the identification results, the wireless communications system can execute appropriate post-identification tasks (to be described in the succeeding paragraphs).

In step 16, it is determined whether a new phase parameter associated with a latest synchronization process has been collected. If no, step 16 is repeated. Otherwise, step 17 is performed such that the new phase parameter replaces the phase parameter associated with an earliest synchronization process. In particular, if a new phase parameter $\theta_j$ associated with latest execution of the synchronization process has been collected, a new Poincaré coordinate data $(\theta_{j-1}, \theta_j)$ is generated to replace an earliest Poincaré coordinate data, which is $(\theta_{j-1-N}, \theta_{j-N})$ under the condition that the collected number of the phase parameters is N.

After step 17, the flow goes back to step 122 to analyze the distribution of the updated set of Poincaré coordinate data on the Poincaré map.

As mentioned hereinabove, the extent of the shadowing phenomenon experienced by the signal transmission path can be classified into the Case 2, Case 3 or Case 4 condition. Therefore, when it was determined in step 13 of the method of the preferred embodiment that the set of Poincaré coordinate data generated from the phase parameters thus collected has a non-elliptical distribution on the Poincaré map, the sub-steps of step 14 as shown in Figure 2 may be executed to determine the extent of the shadowing phenomenon experienced by the signal transmission path.

Initially, in sub-step 141, it is determined if the set of Poincaré coordinate data has a circular distribution on the Poincaré map. In the affirmative, sub-step 142 is executed to identify the signal transmission path as experiencing a severe shadowing condition (Case 3).

The flow proceeds to sub-step 143 if it was determined in sub-step 141 that the set of Poincaré coordinate data does not have a circular distribution on the Poincaré map. In sub-step 143, it is determined that the set of Poincaré coordinate data has a uniform distribution on the Poincaré map. This means that the signal transmission path is experiencing either a mild shadowing condition (Case 2) or a complete shadowing condition (Case 4). Since only white noise is received in the case of the complete shadowing condition, the power for the mild shadowing condition (Case 2) is higher than that for the complete shadowing condition (Case 4). Therefore, by referring to the power parameters of the synchronization processes, it is possible to distinguish between the Case 2 and Case 4 conditions in the method of the preferred embodiment.

In particular, an average value of the power parameters that correspond to the phase parameters collected beforehand is obtained in sub-step 143. In some conventional communications applications, the communications system will estimate the average power ($P_w$) of white noise in the environment. When a communications equipment is taken outdoors after being in use indoors for a period of time, exposure to sunlight will result in an increase in white noise power. Therefore, aside from estimating the average power ($P_w$), the communications equipment will further calculate a variance value. In this embodiment, a tolerable range for white noise average power is defined $P_w \pm$ total dispersion.

Thereafter, in sub-step 144, it is determined if the power parameters fall within the tolerable range for the white noise average power. In the negative, sub-step 145 is executed to identify the signal transmission path as experiencing a mild shadowing condition (Case 2). Otherwise, sub-step 146 is executed to identify the signal transmission path as experiencing a complete shadowing condition (Case 4).

It is evident from the foregoing that, in the method of the preferred embodiment, it is possible to further identify the condition of the signal transmission path as Case 2, Case 3 or Case 4 according to the extent of the shadowing phenomenon so that post-identification tasks may be executed accordingly. For example, upon identification of the mild shadowing condition (Case 2) of the signal transmission path, the wireless communications system can make early arrangements to establish another signal transmission path to ensure optimum communications quality, or to prepare to interrupt wireless communications to conserve power resources. Upon identification of the severe shadowing condition (Case 3) of the signal transmission path, the wireless communications system can establish another signal transmission path to ensure optimum communications quality, or to interrupt temporarily wireless communications until the distribution of the set of Poincaré coordinate data generated from the phase parameters thus collected is restored to the Case 1 condition or the Case 2 condition in order to avoid waste of limited power resources. Similarly, upon identification of the complete shadowing condition (Case 4) of the signal transmission path, wireless communications are temporarily interrupted until the distribution of the set of Poincaré coordinate data generated from the phase parameters thus collected is restored to the Case 1 condition or the Case 2 condition so as to effectively conserve limited power resources.

The method of the preferred embodiment utilizes techniques, such as Largest Lyapnov Exponent (LLE) and Regression Analysis, for calculations. The following example is provided solely for illustrative purposes.

Initially, Poincaré coordinate data for the Poincaré map are generated from the phase parameters associated with the predetermined number of synchronization processes. As mentioned hereinabove, each Poincaré coordinate datum corresponds to a temporally adjacent pair of the phase parameters.

During calculations, the matrix of Poincaré coordinate data is first multiplied by the following matrix to rotate the original X and Y-axes of the Poincaré map by 45 degrees:

$$\begin{bmatrix} \dfrac{\sqrt{2}}{2} & -\dfrac{\sqrt{2}}{2} \\[2ex] \dfrac{\sqrt{2}}{2} & \dfrac{\sqrt{2}}{2} \end{bmatrix}$$

Then, all Poincaré coordinate data are shifted so as to be disposed in the first quadrant of the Poincaré map. This can be achieved through matrix addition utilizing a matrix with $\sqrt{2}\pi$ for all of its elements.

Thereafter, through the use of a first set of dividers parallel to the X-axis, the Poincaré map is divided into an odd number (N) of equally sized partition areas, and the number of Poincaré coordinate data in each partition area is then counted. In this example, the number (N) is equal to 1 plus twice the integer part of (F/6), where F is the signal sampling frequency.

Assuming that the number of data in each partition area is $E(S_n)$, dispersion of the Poincaré coordinate data on the Poincaré map in a first direction can be calculated as follows:

$$[E_{max}(S_j) - E_{min}(S_k) + E_{max2}(S_1) - E_{min2}(S_m)] / M,$$

where M is the total number of Poincaré coordinate data, $E_{max}(S_j)$ and $E_{max2}(S_1)$ are the largest and next largest numbers of data in the partition areas, and $E_{min}(S_k)$ and $E_{min2}(S_m)$ are the smallest and next smallest numbers of data in the partition areas.

Dispersion of the Poincaré coordinate data on the Poincaré map in a second direction transverse to the first direction is subsequently calculated in a manner similar to that described hereinabove while using a second set of dividers that are parallel to the Y-axis.

The presence or absence of the shadowing phenomenon, as well as the extent of the shadowing phenomenon, can be determined with reference to the calculated dispersions. In particular, if the dispersion in the first direction is larger than a dispersion threshold value (such as 0.2), the distribution of the Poincaré coordinate data on the Poincaré map is either circular or elliptical. Then, if the ratio of the dispersion in the first direction to that in the second direction is larger than a preset ratio (such as 1.2), the set of Poincaré coordinate data is determined to have an elliptical distribution on the Poincaré map, and the signal transmission path is determined to have a normal condition (Case 1). On the other hand, if the ratio of the dispersion in the first direction to that in the second direction is not larger than the preset ratio, the set of Poincaré coordinate data is determined to have a circular distribution on the Poincaré map, and the signal transmission path is determined as experiencing severe shadowing (Case 3).

Accordingly, if the dispersion in the first direction is not larger than the dispersion threshold value, the Poincaré coordinate data are determined to have a uniform distribution on the Poincaré map. Under this condition, the power parameters associated with the collected phase parameters are utilized to distinguish between the mild shadowing (Case 2) and complete shadowing (Case 4) conditions. In particular, if the power parameters do not fall within the tolerable range for the average white noise power, the signal transmission path is determined as experiencing mild shadowing (Case 2). Otherwise, the signal transmission path is determined as experiencing complete shadowing (Case 4).

Referring once again to Figure 7, in the preferred embodiment of the wireless communications system according to this invention, each user end equipment 2 includes a user signal-transmitting device 21 and a user signal-receiving device 22. Each system service end equipment 3 includes a system signal-transmitting device 31 capable of wirelessly transmitting signals to be received by the user signal-receiving device 22 of the corresponding user end equipment 2, and a system signal-receiving device 32 capable of wirelessly receiving signals transmitted by the user signal-transmitting device 21 of the corresponding user end equipment 2. The wireless communications system may be a mobile phone communications system or a wireless network. The signal transmission path whose shadowing condition is to be identified can be any one of the path between a user signal-receiving device 22 and a system signal-transmitting device 31, and the path between a system signal-receiving device 32 and a user signal-transmitting device 21. In this embodiment, the user signal-receiving device 22 includes a main system 221 and an identification module 222 coupled to the main system 221. The main system 221 is responsible for data transmission and reception and for periodically executing the aforementioned synchronization process. The identification module 222 is responsible for determining the presence or absence of the shadowing phenomenon, as well as the extent of the shadowing phenomenon, based on the phase parameters generated during the synchronization processes conducted by the main system 221.

In this embodiment, the identification module 222 includes a parameter collecting unit 2221 responsible for collecting the phase parameters from the main system 221, and a judging unit 2222 responsible for generating the set of Poincaré coordinate data from the phase parameters collected by the parameter collecting unit 2221, and for analyzing the distribution of the set of Poincaré coordinate data on a Poincaré map in the manner as described hereinabove. The set of Poincaré coordinate data is updated whenever there is a new phase parameter associated with a latest synchronization process executed by the main system 221.

The judging unit 2222 determines a signal transmission path as not experiencing a shadowing phenomenon when the distribution of the set of Poincaré coordinate data on the Poincaré map is elliptical (Case 1), and as experiencing severe shadowing when the distribution of the set of Poincaré coordinate data on the Poincaré map is circular (Case 3) . When the judging unit 2222 determines the distribution of the set of Poincaré coordinate data on the Poincaré map to be uniform, the parameter collecting unit 2221 further collects the power parameters associated with the collected phase parameters from the main system 221 so as to determine if the power parameters fall within the tolerable range for average white noise power. The signal transmission path is determined as experiencing mild shadowing (Case 2) when the collected power parameters do not fall within the tolerable range for average white noise power, and as experiencing complete shadowing (Case 4) when otherwise.

In other embodiments, the system signal-receiving device 32 of each system service end equipment 3 can incorporate the aforementioned identification module 222. Moreover, the user signal-receiving device 22 can be configured to execute the various steps of the method of the present invention through program instructions stored in a data storage medium.

It has thus been shown that, in the method and system of the present invention, not only can occurrence of the shadowing phenomenon be identified during wireless communications, the extent of the shadowing phenomenon can be identified as well. Through the identification results, the wireless communications system can make arrangements for establishing another signal transmission path at an earlier time, such that handoff can be conducted earlier to improve communications quality. The wireless communications system can also interrupt temporarily signal transmissions based on the identification results to effectively conserve power resources.

**Claims**

1. A method for identifying occurrence of shadowing phenomenon to be implemented using a wireless communications system that includes a signal-transmitting device (31, 21) and a signal-receiving device (22, 32), the signal-receiving device (22, 32) periodically executing a synchronization process to evaluate quality of wireless communications conducted through a signal transmission path between the signal-transmitting device (31, 21) and the signal-receiving device (22, 32), a set of signal-state estimated values that includes at least a phase parameter and a power parameter being generated during each synchronization process, said method comprising the steps of:

    a) collecting the phase parameters for a number of the synchronization processes;
    b) generating a set of Poincaré coordinate data from the phase parameters collected in step a);
    c) analyzing distribution of the set of Poincaré coordinate data generated in step b) on a Poincaré map; and
    d) determining that the signal transmission path is experiencing a shadowing phenomenon when the set of Poincaré coordinate data generated in step b) has a non-elliptical distribution on the Poincaré map, and that the signal transmission path is not experiencing the shadowing phenomenon when the set of Poincaré coordinate data generated in step b) has an elliptical distribution on the Poincaré map.

2. The method as claimed in Claim 1, **characterized in that**, in step d), the signal transmission path is determined to experience severe shadowing when the set of Poincaré coordinate data generated in step b) has a circular distribution on the Poincaré map.

3. The method as claimed in Claim 2, further **characterized in that**, in step d), the signal transmission path is determined to experience mild shadowing when the set of Poincaré coordinate data generated in step b) has a uniform distribution on the Poincaré map, and the power parameters corresponding to the phase parameters collected in step a) do not fall within a tolerable range for white noise average power.

4. The method as claimed in Claim 3, further **characterized in that**, in step d), the signal transmission path is determined to experience complete shadowing when the set of Poincaré coordinate data generated in step b) has a uniform distribution on the Poincaré map, and the power parameters corresponding to the phase parameters collected in step a) fall within the tolerable range for average white noise power.

**5.** The method as claimed in Claim 1, **characterized in that**, in step c), distribution analysis is conducted by calculating dispersion of the set of Poincaré coordinate data generated in step b) on the Poincaré map.

**6.** A signal-receiving device (22, 32) capable of identifying occurrence of shadowing phenomenon and adapted for use in a wireless communications system, the wireless communications system including a signal-transmitting device (31, 21) capable of wireless communications with said signal-receiving device (22, 32), said signal-receiving device (22, 32) comprising:

a main system (221) for periodically executing a synchronization process to evaluate quality of wireless communications conducted through a signal transmission path between the signal-transmitting device (31, 21) and said signal-receiving device (22, 32), a set of signal-state estimated values that includes at least a phase parameter and a power parameter being generated during each synchronization process; and
an identification module (222) coupled to said main system (221) and configured to collect the phase parameters for a number of the synchronization processes, to generate a set of Poincaré coordinate data from the phase parameters collected thereby, to analyze distribution of the set of Poincaré coordinate data on a Poincaré map, and to determine that the signal transmission path is experiencing a shadowing phenomenon when the set of Poincaré coordinate data analyzed thereby has a non-elliptical distribution on the Poincaré map, and that the signal transmission path is not experiencing the shadowing phenomenon when the set of Poincaré coordinate data analyzed thereby has an elliptical distribution on the Poincaré map.

**7.** The signal-receiving device (22, 32) as claimed in Claim 6, **characterized in that** said identification module (222) includes:

a parameter collecting unit (2221) responsible for collecting the phase parameters; and
a judging unit (2222) responsible for generating the set of Poincaré coordinate data from the phase parameters collected by said parameter collecting unit (2221), and for analyzing the distribution of the set of Poincaré coordinate data on the Poincaré map.

**8.** A data storage medium comprising program instructions to be executed by a signal-receiving device (22, 32) so as to enable the signal-receiving device (22, 32) to execute steps of a method for identifying occurrence of shadowing phenomenon, the signal-receiving device (22, 32) being used in a wireless communications system, the wireless communications system including a signal-transmitting device (31, 21) capable of wireless communications with the signal-receiving device (22, 32), the signal-receiving device (22, 32) periodically executing a synchronization process to evaluate quality of wireless communications conducted through a signal transmission path between the signal-transmitting device (31, 21) and the signal-receiving device (22, 32), a set of signal-state estimated values that includes at least a phase parameter and a power parameter being generated during each synchronization process, said method comprising the steps of:

a) collecting the phase parameters for a number of the synchronization processes;
b) generating a set of Poincaré coordinate data from the phase parameters collected in step a);
c) analyzing distribution of the set of Poincaré coordinate data generated in step b) on a Poincaré map; and
d) determining that the signal transmission path is experiencing a shadowing phenomenon when the set of Poincaré coordinate data generated in step b) has a non-elliptical distribution on the Poincaré map, and that the signal transmission path is not experiencing the shadowing phenomenon when the set of Poincaré coordinate data generated in step b) has an elliptical distribution on the Poincaré map.

**9.** A wireless communications system capable of identifying occurrence of shadowing phenomenon, including user end equipment (2) including a user signal-receiving device (22) and a user signal-transmitting device (21), and system service end equipment (3) including a system signal-transmitting device (31) capable of wirelessly transmitting signals to be received by said user signal-receiving device (22), and a system signal-receiving device (32) capable of wirelessly receiving signals transmitted by said user signal-transmitting device (21), **characterized in that** at least one of said user signal-receiving device (22) and said system signal-receiving device (32) periodically executes a synchronization process to evaluate quality of wireless communications conducted through a signal transmission path between said at least one of said user signal-receiving device (22) and said system signal-receiving device (32), and the corresponding one of said system signal-transmitting device (31) and said user signal-transmitting device (21), a set of signal-state estimated values that includes a phase parameter being generated during each synchronization process, said at least one of said user signal-receiving device (22) and said system signal-receiving device (32) collecting the phase parameters for a number of the synchronization processes, generating a set of Poincaré coordinate data from the phase parameters collected thereby, analyzing distribution of the set of Poincaré coordinate data generated thereby on a Poincaré map, and determining that the signal transmission path is experiencing a shadowing phenomenon when the set of Poincaré coordinate data analyzed thereby has a non-elliptical distribution on the Poincaré map, and that the signal transmission path is not experiencing the shadowing phenomenon when the set of Poincaré coordinate data analyzed thereby has an elliptical distribution on the Poincaré map.

10. The wireless communications system as claimed in Claim 9, further **characterized in that** the signal transmission path is determined by said at least one of said user signal-receiving device (22) and said system signal-receiving device (32) to experience severe shadowing when the set of Poincaré coordinate data analyzed thereby has a circular distribution on the Poincaré map.

11. The wireless communications system as claimed in Claim 10, **characterized in that** the set of signal-state estimated values generated during each synchronization process further includes a power parameter, the signal transmission path being determined by said at least one of said user signal-receiving device (22) and said system signal-receiving device (32) to experience mild shadowing when the set of Poincaré coordinate data analyzed thereby has a uniform distribution on the Poincaré map, and the power parameters corresponding to the phase parameters collected thereby do not fall within a tolerable range for white noise average power.

12. The wireless communications system as claimed in Claim 11, further **characterized in that** the signal transmission path is determined by said at least one of said user signal-receiving device (22) and said system signal-receiving device (32) to experience complete shadowing when the set of Poincaré coordinate data analyzed thereby has a uniform distribution on the Poincaré map, and the power parameters corresponding to the phase parameters collected thereby fall within the tolerable range for white noise average power.

**Patentansprüche**

1. Verfahren zum Identifizieren von Abschattungserscheinungen zur Implementierung mittels eines drahtlosen Kommunikationssystems, das eine Signalsendeeinrichtung (31, 21) und eine Signalempfangseinrichtung (22, 32) enthält, wobei die Signalempfangseinrichtung (22, 32) einen Synchronisationsprozeß periodisch ausführt, um die Qualität der über einen Signalsendeweg zwischen der Signalsendeeinrichtung (31, 21) und der Signalempfangseinrichtung (22, 32) geführten drahtlosen Kommunikation zu bewerten, wobei ein Satz Signalzustandsschätzwerte, der mindestens einen Phasenparameter und einen Leistungsparameter enthält, während jedes Synchronisationsprozesses generiert wird, wobei das Verfahren die Schritte umfaßt:

a) Erfassen der Phasenparameter für eine Anzahl der Synchronisationsprozesse;
b) Generieren eines Satzes von Poincaré-Koordinatendaten aus den in Schritt a) erfaßten Phasenparametern;
c) Analysieren der Verteilung des in Schritt b) generierten Satzes von Poincaré-Koordinatendaten auf einer Poincaré-Karte; und
d) Festlegen, daß der Signalsendeweg eine Abschattungserscheinung erfährt, wenn der in Schritt b) generierte Satz von Poincaré-Koordinatendaten eine nichtelliptische Verteilung auf der Poincaré-Karte aufweist, und daß der Signalsendeweg keine Abschattungserscheinung erfährt, wenn der in Schritt b) generierte Satz von Poincaré-Koordinatendaten eine elliptische Verteilung auf der Poincare-Karte aufweist.

2. Verfahren nach Anspruch 1, **dadurch gekennzeichnet, daß** in Schritt d) festgelegt wird, daß der Signalsendeweg eine starke Abschattung erfährt, wenn der in Schritt b) generierte Satz von Poincare-Koordinatendaten eine kreisförmige Verteilung auf der Poincaré-Karte aufweist.

3. Verfahren nach Anspruch 2, ferner **dadurch gekennzeichnet, daß** in Schritt d) festgelegt wird, daß der Signalsendeweg eine leichte Abschattung erfährt, wenn der in Schritt b) generierte Satz von Poincaré-Koordinatendaten eine gleichförmige Verteilung auf der Poincaré-Karte aufweist und die Leistungsparameter, die den in Schritt a) erfaßten Phasenparametern entsprechen, nicht in einen zulässigen Bereich für die mittlere Leistung von weißem Rauschen fallen.

4. Verfahren nach Anspruch 3, ferner **dadurch gekennzeichnet, daß** in Schritt d) festgelegt wird, daß der Signalsendeweg eine vollständige Abschattung erfährt, wenn der in Schritt b) generierte Satz von Poincaré-Koordinatendaten eine gleichförmige Verteilung auf der Poincaré-Karte aufweist und die Leistungsparameter, die den in Schritt a) erfaßten Phasenparametern entsprechen, in den zulässigen Bereich für mittlere Leistung von weißem Rauschen fallen.

5. Verfahren nach Anspruch 1, **dadurch gekennzeichnet, daß** in Schritt c) eine Verteilungsanalyse durch Berechnen der Streuung des in Schritt b) generierten Satzes von Poincaré-Koordinatendaten auf der Poincaré-Karte durchgeführt wird.

6. Signalempfangseinrichtung (22, 32) zum Identifizieren von Absschattungserscheinungen und zur Verwendung in einem drahtlosen Kommunikationssystem, wobei das drahtlose Kommunikationssystem eine Signalsendeeinrichtung (31, 21) für drahtlose Kommunikation mit der Signalempfangseinrichtung (22, 32) enthält, wobei die Signalempfangseinrichtung (22, 32) umfaßt:

ein Hauptsystem (221) zum periodischen Ausführen eines Synchronisationsprozesses, um die Qualität von über einen Signalsendeweg zwischen der Signalsendeeinrichtung (31, 21) und der Signalempfangseinrichtung (22, 32) durchgeführter drahtloser Kommunikation zu bewerten, wobei ein Satz von Signalzustandsschätzwerten, der mindestens einen Phasenparameter und einen Leistungsparameter enthält, während jedes Synchronisationsprozesses generiert wird; und
ein Identifikationsmodul (222), das mit dem Hauptsystem (221) gekoppelt und konfiguriert ist, um die Phasenparameter für eine Anzahl der Synchronisationsprozesse zu erfassen, einen Satz von Poincaré-Koordinatendaten aus den auf diese Weise erfaßten Phasenparametern zu generieren, die Verteilung des Satzes von Poincaré-Koordinatendaten auf einer Poincaré-Karte zu analysieren und festzulegen, daß der Signalsendeweg eine Abschattungserscheinung erfährt, wenn der **dadurch** analysierte Satz von Poincaré-Koordinatendaten eine nichtelliptische Verteilung auf der Poincaré-Karte aufweist, und daß der Signalsendeweg keine Abschattungserscheinung erfährt, wenn der **dadurch** analysierte Satz von Poincaré-Koordinatendaten eine elliptische Verteilung auf der Poincaré-Karte aufweist.

7. Signalempfangseinrichtung (22, 32) nach Anspruch 6, **dadurch gekennzeichnet, daß** das Identifikationsmodul (222) enthält:

eine Parametererfassungseinheit (2221), die für die Erfassung der Phasenparameter verantwortlich ist; und eine Beurteilungseinheit (2222), die für die Generierung des Satzes von Poincaré-Koordinatendaten aus den von der Parametererfassungseinhcit (2221) erfaßten Phasenparametern und für die Analyse der Verteilung des Satzes von Poincaré-Koordinatendaten auf der Poincaré-Karte verantwortlich ist.

8. Datenspeichermedium mit Programmbefehlen zur Ausführung durch eine Signalempfangseinrichtung (22, 32), um der Signalempfangseinrichtung (22, 32) zu ermöglichen, Schritte eines Verfahrens zum Identifizieren von Abschattungserscheinungen auszuführen, wobei die Signalempfangseinrichtung (22, 32) in einem drahtlosen Kommunikationssystem verwendet wird, das drahtlose Kommunikationssystem eine Signalsendeeinrichtung (31, 21) zur drahtlosen Kommunikation mit der Signalempfangseinrichtung (22, 32) enthält, die Signalempfangseinrichtung (22, 32) einen Synchronisationsprozeß periodisch ausführt, um die Qualität von über einen Signalsendeweg zwischen der Signalsendeeinrichtung (31, 21) und der Signalempfangseinrichtung (22, 32) durchgeführter drahtloser Kommunikation zu bewerten, ferner ein Satz von Signalzustandsschätzwerten, der mindestens einen Phasenparameter und einen Leistungsparameter enthält, während jedes Synchronisationsprozesses generiert wird, wobei das Verfahren die Schritte umfaßt:

a) Erfassen der Phasenparameter für eine Anzahl der Synchronisationsprozesse;
b) Generieren eines Satzes von Pomcare-Koordinatendaten aus den in Schritt a) erfaßten Phasenparametern;
c) Analysieren der Verteilung des in Schritt b) generierten Satzes von Poincaré-Koordinatendaten auf einer Poineare-Karte; und
d) Festlegen, daß der Signalsendeweg eine Abschattungserscheinung erfährt, wenn der in Schritt b) generierte Satz von Poincaré-Koordinatendaten eine nichtelliptische Verteilung auf der Poincaré-Karte aufweist, und daß der Signalsendeweg keine Abschattungserscheinung erfährt wenn der in Schritt b) generierte Satz von Poincaré-Koordinatendaten eine elliptische Verteilung auf der Poincaré-Karte aufweist.

9. Drahtloses Kommunikationssystem zum Identifizieren von Abschattungserscheinungen, enthaltend:

eine Endnutzereinrichtung (2), die eine Nutzersignalempfangseinrichtung (22) und eine Nutzersignalsendeeinrichtung (21) enthält, und

eine Systemdienstendeinrichtung (3), die eine Systemsignalsendeeinrichtung (31) zum drahtlosen Senden von Signalen zum Empfang durch die Nutzersignalempfangseinrichtung (22) und eine Systemsignalempfangseinrichtung (32) zum drahtlosen Empfangen von Signalen, die von der Nutzersignalsendeeinrichtung (21) gesendet werden, enthält,

**dadurch gekennzeichnet, daß** mindestens eine von der Nutzersignalempfangseinrichtung (22) und der Systemsignalempfangseinrichtung (32) einen Synchronisationsprozeß periodisch ausführt, um die Qualität von über einen Signalsendeweg zwischen der mindestens einen von der Nutzersignalempfangseinrichtung (22) und der Systemsignalempfangseinrichtung (32) und der korrespondierenden der Systemsignalsendeeinrichtung (31) und der Nutzersignalsendeeinrichtung (21) durchgeführter Kommunikation zu bewerten, wobei ein Satz von Signalzustartdsschätzwerten, der einen Phasenparameter enthält, während jedes Synchronisationsprozesses generiert wird, ferner die mindestens eine der Nutzersignalempfangseinrichtung (22) und der Systemsignalempfangseinrichtung (32) die Phasenparameter für eine Anzahl der Synchronisationsprozesse erfaßt, einen Satz von Poincaré-Koordinatendaten aus den **dadurch** erfaßten Phasenparametern generiert, die Verteilung des **dadurch** generierten Satzes von Poincaré-Koordinatendaten auf einer Poincaré-Karte analysiert und festlegt, daß der Signalsendeweg eine Abschattungserscheinung erfährt, wenn der **dadurch** analysierte Satz von Poincaré-Koordinatendaten eine nichtelliptische Verteilung auf der Poincaré-Karte aufweist, und daß der Signalsendeweg keine Abschattungserscheinung erfährt, wenn der **dadurch** analysierte Satz von Poincaré-Koordinatendaten eine elliptische Verteilung auf der Poincaré-Karte aufweist.

10. Drahtloses Kommunikationssystem nach Anspruch 9, ferner **dadurch gekennzeichnet, daß** von der mindestens einen der Nutzersignalempfangscinrichtung (22) und der Systemsignalempfangseinrichtung (32) festgelegt wird, daß der Signalsendeweg eine schwere Abschattung erfährt, wenn der **dadurch** analysierte Satz von Poincaré-Koordinatendaten eine kreisförmige Verteilung auf der Poincaré-Karte aufweist.

11. Drahtloses Kommunikationssystem nach Anspruch 10, **dadurch gekennzeichnet, daß** der Satz von Signalzustandsschätzwerten, der während jedes Synchronisationsprozesses generiert wird, ferner einen Leistungsparameter enthält, wobei von der mindestens einen der Nutzersignalempfangseinrichtung (22) und der Systemsignalempfangseinrichtung (32) festgelegt wird, daß der Signalsendeweg eine leichte Abschattung erfährt, wenn der **dadurch** analysierte Satz von Poincare-Koordinatendaten eine gleichförmige Verteilung auf der Poincaré-Karte aufweist und die Leistungsparameter, die den **dadurch** erfaßten Phasenparametern entsprechen, nicht in einen zulässigen Bereich für die durchschnittliche Leistung von weißem Rauschen fallen.

12. Drahtloses Kommunikationssystem nach Anspruch 11, ferner **dadurch gekennzeichnet, daß** von der mindestens einen der Nutzersignalempfangseinrichtung (22) und der Systemsignalempfangseimichtung (32) festgelegt wird, daß der Signalsendeweg eine vollständige Abschattung erfährt, wenn der **dadurch** analysierte Satz von Poincaré-Koordinatendaten eine gleichförmige Verteilung auf der Poincaré-Karte aufweist, und die Leistungsparameter, die den **dadurch** erfaßten Phasenparametern entsprechen, in den zulässigen Bereich für die mittlere Leistung von weißem Rauschen fallen.

## Revendications

1. Procédé d'identification de l'apparition d'un phénomène de masquage, à implémenter en utilisant un système de communication sans fil comprenant un dispositif d'émission de signal (31, 21) et un dispositif de réception de signal (22, 32), le dispositif de réception de signal exécutant périodiquement un processus de synchronisation pour évaluer la qualité des communications sans fil effectuées par un chemin de transmission de signal entre le dispositif d'émission de signal (31, 21) et le dispositif de réception de signal (22, 32), en générant pendant chaque processus de synchronisation, un jeu de valeurs estimées d'état de signal comprenant au moins un paramètre de phase et un paramètre de puissance,

ce procédé comprenant les étapes consistant à :

a) collecter les paramètres de phase pour un certain nombre des processus de synchronisation,
b) générer un jeu de données de coordonnées de Poincaré à partir des paramètres de phase collectés dans l'étape a),
c) analyser la répartition du jeu de données de coordonnées de Poincaré généré dans l'étape b), sur une carte de Poincaré, et
d) déterminer que le chemin de transmission de signal fait l'expérience d'un phénomène de masquage lorsque le jeu de données de coordonnées de Poincaré généré dans l'étape b) présente une répartition non elliptique sur la carte de Poincaré, et que le chemin de transmission de signal ne fait pas l'expérience du phénomène de masquage lorsque le jeu de données de coordonnées de Poincaré généré dans l'étape b) présente une répartition elliptique sur la carte de Poincaré.

2. Procédé selon la revendication 1,
**caractérisé en ce que**
dans l'étape d), on détermine que le chemin de transmission de signal fait l'expérience d'un fort masquage lorsque le jeu de données de coordonnées de Poincaré généré dans l'étape b) présente une répartition circulaire sur la carte de Poincaré.

3. Procédé selon la revendication 2,
**caractérisé en outre en ce que**
dans l'étape d), on détermine que le chemin de transmission de signal fait l'expérience d'un masquage léger lorsque le jeu de données de coordonnées de Poincaré généré dans l'étape b) présente une répartition uniforme sur la carte de Poincaré, et que les paramètres de puissance correspondant aux paramètres de phase collectés dans l'étape a) ne tombent pas à l'intérieur d'une plage tolérable pour une puissance moyenne de bruit blanc.

4. Procédé selon la revendication 3,
**caractérisé en outre en ce que**
dans l'étape d), on détermine que le chemin de transmission de signal fait l'expérience d'un masquage complet lorsque le jeu de données de coordonnées de Poincaré généré dans l'étape b) présente une répartition uniforme sur la carte de Poincaré, et que les paramètres de puissance correspondant aux paramètres de phase collectés dans l'étape a) tombent à l'intérieur de la plage tolérable pour une puissance moyenne de bruit blanc.

5. Procédé selon la revendication 1,
**caractérisé en ce que**
dans l'étape c), on effectue l'analyse de répartition en calculant la dispersion du jeu de données de coordonnées de Poincaré généré dans l'étape b), sur la carte de Poincaré.

6. Dispositif de réception de signal (22, 32) capable d'identifier l'apparition d'un phénomène de masquage destiné à être utilisé dans un système de communication sans fil, ce système de communication sans fil comprenant un dispositif d'émission de signal (31, 21) capable d'établir des communications sans fil avec le dispositif de réception de signal (22, 32), ce dispositif de réception de signal (22, 32) comprenant :

 - un système principal (221) destiné à exécuter périodiquement un processus de synchronisation pour évaluer la qualité des communications sans fil effectuées par un chemin de transmission de signal entre le dispositif d'émission de signal (31, 21) et le dispositif de réception de signal (22, 32), en générant pendant chaque processus de synchronisation, un jeu de valeurs estimées d'état de signal comprenant au moins un paramètre de phase et paramètre de puissance, et
 - un module d'identification (222) couplé au système principal (221) et configuré pour collecter les paramètres de phase d'un certain nombre de processus de synchronisation, de manière à générer un jeu de données de coordonnées de Poincaré à partir des paramètres de phase ainsi collectés, pour analyser la répartition du jeu de données de coordonnées de Poincaré sur une carte de Poincaré, et pour déterminer que le chemin de transmission de signal fait l'expérience d'un phénomène de masquage lorsque le jeu de données de coordonnées de Poincaré ainsi analysé présente une répartition non elliptique de la carte de Poincaré, et que le chemin de transmission de signal ne fait pas l'expérience du phénomène de masquage lorsque le jeu de données de coordonnées de Poincaré ainsi analysé présente une répartition elliptique sur la carte de Poincaré.

7. Dispositif de réception de signal (22, 32) selon la revendication 6,
**caractérisé en ce que**
le module d'identification (222) comprend :

 - un élément de collecte de paramètres (2221) chargé de collecter les paramètres de phase, et
 - un élément d'estimation (2222) chargé de générer le jeu de données de coordonnées de Poincaré à partir des paramètres de phase collectés par l'élément de collecte de paramètres (2221), et d'analyser la répartition du jeu de données de coordonnées de Poincaré sur la carte de Poincaré.

8. Agent de stockage de données comprenant des instructions de programme devant être exécutées par un dispositif de réception de signal (22, 32) de manière à permettre au dispositif de réception de signal (22, 32) d'exécuter les étapes d'un procédé d'identification de l'apparition d'un phénomène de masquage, le dispositif de réception de signal (22, 32) étant utilisé dans un système de communication sans fil, ce système de communication sans fil comprenant un dispositif d'émission de signal (31, 21) capable d'établir des communications sans fil avec le dispositif de réception de signal (22, 32), ce dispositif de réception de signal (22, 32) exécutant périodiquement un processus de synchronisation pour évaluer la qualité des communications sans fil établies par un chemin de transmission de signal entre le dispositif d'émission de signal (31, 21) et le dispositif de réception de signal (22, 32), en générant pendant chaque processus de synchronisation, un jeu de valeurs estimées d'état de signal comprenant au moins un paramètre de phase et un paramètre de puissance, le procédé comprenant les étapes consistant à :

a) collecter les paramètres de phase pour un certain nombre des processus de synchronisation,
b) générer un jeu de données de coordonnées de Poincaré à partir des paramètres de phase collectés dans l'étape a),
c) analyser la répartition du jeu de données de coordonnées de Poincaré généré dans l'étape b), sur une carte de Poincaré, et
d) déterminer que le chemin de transmission de signal fait l'expérience d'un phénomène de masquage lorsque le jeu de données de coordonnées de Poincaré généré dans l'étape b) présente une répartition non elliptique sur la carte de Poincaré, et que le chemin de transmission de signal ne fait pas l'expérience du phénomène de masquage lorsque le jeu de données de coordonnées de Poincaré généré dans l'étape b) présente une répartition elliptique sur la carte de Poincaré.

**9.** Système de communication sans fil capable d'identifier l'apparition d'un phénomène de masquage comprenant :

- un équipement d'extrémité utilisateur (2) incluant un dispositif de réception de signal utilisateur (22) et un dispositif d'émission de signal utilisateur (21), et
- un équipement d'extrémité de service système (3) incluant un dispositif d'émission de signal système (31) capable d'émettre sans fil des signaux devant être reçus par le dispositif de réception de signal utilisateur (22), et un dispositif de réception de signal système (32) capable de recevoir sans fil les signaux émis par le dispositif d'émission de signal utilisateur (21),

**caractérisé en ce qu'**
au moins l'un du dispositif de réception de signal utilisateur (22) et du dispositif de réception de signal système (32) exécute périodiquement un processus de synchronisation pour évaluer la qualité des communications sans fil transmises par un chemin de transmission de signal entre, au moins l'un du dispositif de réception du signal utilisateur (22) et du dispositif de réception de signal système (32), et au moins l'un correspondant du dispositif d'émission de signal système (31) et du dispositif d'émission de signal utilisateur (21), en générant pendant chaque processus de synchronisation, un jeu de valeurs estimées d'état de signal comprenant un paramètre de phase, au moins l'un du dispositif de réception de signal utilisateur (22) et du dispositif de réception de signal système (32) collectant les paramètres de phase pour un certain nombre des processus de synchronisation,

- générant un jeu de données de coordonnées de Poincaré à partir des paramètres de phase ainsi collectés,
- analysant la répartition du jeu de données de coordonnées de Poincaré ainsi généré, sur une carte de Poincaré, et
- déterminant que le chemin de transmission de signal fait l'expérience d'un phénomène de masquage lorsque le jeu de données de coordonnées de Poincaré ainsi analysé présente une répartition non elliptique sur la carte de Poincaré, et que le chemin de transmission de signal ne fait pas l'expérience du phénomène de masquage lorsque le jeu de données de coordonnées de Poincaré ainsi analysé présente une répartition elliptique sur la carte de Poincaré.

**10.** Système de communication sans fil selon la revendication 9,
**caractérisé en outre en ce qu'**
on détermine par au moins l'un du dispositif de réception de signal utilisateur (22) ou du dispositif de réception de signal système (32), que le chemin de transmission de signal fait l'expérience d'un fort masquage lorsque le jeu de données de coordonnées de Poincaré ainsi analysé présente une répartition circulaire sur la carte de Poincaré.

**11.** Système de communication sans fil selon la revendication 10,
**caractérisé en ce que**
le jeu de valeurs estimées d'état de signal, généré pendant chaque processus de synchronisation, comprend en outre un paramètre de puissance, et

on détermine par au moins l'un du dispositif de réception de signal utilisateur (22) ou du dispositif de réception de signal système (32), que le chemin de transmission de signal fait l'expérience d'un masquage léger lorsque le jeu de données de coordonnées de Poincaré ainsi analysé présente une répartition uniforme sur la carte de Poincaré, et que les paramètres de puissance correspondent aux paramètres de phase ainsi collectés, ne tombent pas à l'intérieur d'une plage tolérable pour de la puissance moyenne de bruit blanc.

12. Système de communication sans fil selon la revendication 11,
**caractérisé en outre en ce qu'**
on détermine par au moins l'un du dispositif de réception de signal utilisateur (22) ou du dispositif de réception de signal système (32), que le chemin de transmission de signal fait l'expérience d'un masquage complet lorsque le jeu de données de coordonnées de Poincaré ainsi analysé présente une répartition uniforme sur la carte de Poincaré, et que les paramètres de puissance correspondant aux paramètres de phase ainsi collectés, tombent à l'intérieur de la plage tolérable pour de la puissance moyenne de bruit blanc.

EP 1 806 938 B1

```
                    ┌─────────────┐
                    │    Start    │
                    └──────┬──────┘
                           │              no
                           ▼◄──────────────────────┐
              ╱─────────────────────╲               │
             ╱   Phase parameters     ╲      ┌─11    │
            ╱   for predetermined number╲─────        │
            ╲  of synchronization processes╱          │
             ╲      collected?          ╱             │
              ╲───────────┬─────────────╱             │
                          │ yes                       │
                          ▼                    ┌─121   │
              ┌───────────────────────────┐           │
              │ Generate Poincarè coordinate│          │
              │   data from phase parameters│          │
              └─────────────┬──────────────┘   ┌─122   │
                            ▼                           │
              ┌───────────────────────────┐            │
           ┌─►│ Analyze distribution of Poincarè│       │
           │  │ coordinate data on Poincarè map │       │
           │  └─────────────┬──────────────┘            │
           │                ▼            ┌─13      ┌─14  │
           │    ╱───────────────────╲  no ┌──────────┐  │
           │   ╱  Elliptical distribution?╲───►│Shadowing │  │
           │   ╲───────────┬─────────╱      │phenomenon│  │
           │               │ yes            └────┬─────┘  │
           │               ▼        ┌─15          │       │
           │   ┌───────────────────┐              │       │
           │   │  Normal condition │              │       │
           │   └─────────┬─────────┘              │       │
           │   no        │                        │       │
           │  ┌──────────┤◄───────────────────────┘       │
           │  │          ▼              ┌─16               │
           │  │ ╱──────────────────╲                       │
           │  │╱  New phase parameter?╲                     │
           │  │╲──────────┬─────────╱                       │
           │  │           │ yes         ┌─17                │
           │  │           ▼                                 │
           │  │ ┌───────────────────────────┐              │
           └──┴─│ Replace earliest phase parameter│         │
                │  with new phase parameter     │          │
                └───────────────────────────────┘          │
```

FIG. 1

Determination of extent
of shadowing phenomenon

141

Circular distribution? — yes → Severe shadowing — 142

no

143 — Uniform distribution

144 — Power parameters
fall within tolerable
range for average white
noise power — yes → Complete shadowing — 146

no

145 — Mild shadowing

FIG. 2

32

31

30m

33

33

35m

Case1    Case2    Case3    Case4

FIG. 3

FIG. 4

FIG. 5

FIG. 6

FIG. 7